# EUROPEAN PATENT SPECIFICATION

(11) **EP 3 401 576 B1**
(45) Date of publication and mention of the grant of the patent: **08.09.2021**
(21) Application number: 17169853.3
(22) Date of filing: 08.05.2017
(51) Int. Cl.: G05G 1/08, F16J 3/02, F16J 3/04, F24C 3/12, G05G 25/04

(54) **GASKET AND GAS HOB COMPRISING A GASKET**
DICHTUNG UND GASHERD MIT EINER DICHTUNG
JOINT D'ÉTANCHÉITÉ ET PLAQUE À GAZ COMPRENANT UN JOINT

(43) Date of publication of application: 14.11.2018
(73) Proprietor: ELECTROLUX APPLIANCES AKTIEBOLAG, 105 45 Stockholm (SE)
(72) Inventor: SCOGNAMIGLIO, Antonio, 47100 Forli (IT); SORRENTINO, Emanuele, 47100 Forli (IT)
(74) Representative: Electrolux Group Patents

(56) References cited:
- EP-A1- 1 103 747
- WO-A1-2017/026960
- WO-A1-2017/061212
- ES-A1- 2 200 723
- GB-A- 2 013 287
- JP-A- 2012 031 951

## Description

The present invention relates generally to the field of household appliances. More specifically, the present invention is related to a household appliance, specifically a gas hob, comprising a gasket adapted to avoid ingress of liquid.

### BACKGROUND OF THE INVENTION

Gas hobs are known in prior art. Said gas hobs comprise a horizontal hob portion, e.g. a hob worktop at which one or more knobs are provided for controlling the gas flow to the gas burners. Below the horizontal hob portion one or more gas taps are provided. Each gas tap comprises a shaft extending through an opening of the horizontal hob portion. In order to seal the opening of the worktop, gaskets are known which extend along the edge of the opening in order to provide a sealing of the opening in cases when a knob is attached to the shaft.

However, known gaskets do not provide a sealing in case that the knob is removed from the shaft.

ES 2 200 723 A1 discloses a gas cooking appliance, the thermal output thereof being regulated by rotating a rotary shaft, thereby controlling a valve for adjusting the gas flow. Said rotary shaft is used to ignite the gas burner by pushing it in an axial direction. The rotary shaft is passed through a through hole of a top panel and a gasket seals the gap between the shaft and an edge of the through hole. The gasket comprises an annular lip at its interior edge encompassing the rotary shaft, said lip providing an insertion opening for the rotary shaft with an opening diameter, which is smaller than the diameter of the rotary shaft. That way, the annular lip is frusto-conically raised when the rotary shaft is inserted. However, when pushing said rotary shaft to ignite the gas burner the lip may slip downwardly and turn upside down, what stresses the lip and impairs the sealing effect.

WO 2017/061212 A1 discloses a dust cover used for a ball joint provided in various devices such as a vehicle. The dust cover is made of an elastic material such as rubber and includes a deformable annular and film-shaped body portion, a fixed portion fixed to a socket, and a seal portion that includes an inner peripheral seal portion slidably provided on a shaft portion of a ball stud. When the ball stud rotates, the seal portion slides on the shaft of the ball stud.

### SUMMARY OF THE INVENTION

It is an objective of embodiments of the present invention to provide a household appliance comprising a gasket which comprises a simple design, which can be assembled easily and which provides a sealing of the opening also in case that the knob of the control element is removed. The objective is solved by the features of the independent claims. Preferred embodiments are given in the dependent claims. If not explicitly indicated otherwise, embodiments of the invention can be freely combined with each other.

According to an aspect, the invention relates to a household appliance, specifically a gas hob, comprising a horizontal appliance portion, preferably an appliance worktop, and one or more control elements provided at said appliance portion. The control element comprises a shaft. An area between an opening of said appliance portion and the shaft of the control element is sealed by a gasket. The gasket seals a passage of the shaft through the appliance portion, specifically a horizontal appliance portion. The gasket comprises :
- a first gasket portion being adapted to provide a sealed connection around the shaft of the control element;
- a second gasket portion adapted to be arranged below said appliance portion; and
- a coupling portion for coupling said first and second gasket portions.

Said gasket is adapted to seal a ring-shaped passage between said shaft of the control element and the edge of the opening of the appliance portion in order to avoid ingress of liquid into one or more control element portions arranged below the gasket.

Said gasket is advantageous, because the passage between said shaft of the control element and the edge of the opening of the appliance portion is completely sealed even in case that a knob for actuating the control element, e.g. a gas tap, is not installed at the shaft.

The term household appliance as used in the present disclosure may refer to any appliance comprising a control element with a shaft, specifically hobs, washing machines, dish washers etc.

According to embodiments, said gasket comprises a stepped contour with a lower annular portion provided by the second gasket portion and an upper annular portion provided by a first section of the coupling portion. Said lower annular portion is adapted to be received below said appliance portion and may be further adapted to lie flat against the lower surface of the appliance portion in order to provide a sealing between the gasket and the appliance portion. The upper annular portion may protrude through said opening provided in the appliance portion. Said upper annular portion may be arranged flush with the upper surface of the appliance portion or may protrude upwardly from said upper surface of the appliance portion.

According to embodiments, said lower annular portion and said upper annular portion are coupled by a ring-shaped or tube-shaped third section of the coupling portion vertically extending between said upper and lower annular portion. By means of said third section of the coupling portion, the upper and lower annular portion are arranged at a distance to each other. Said distance may be equal or greater than the thickness of the appliance portion, specifically, the thickness of the appliance worktop.

According to the invention, the first gasket portion comprises a lip or neckband protruding upwardly from the coupling portion both in an assembled stated and in a non-assembled state. Said lip or neckband protrudes upwardly from said upper annular portion and may be adapted to provide a close fit at the shaft. The lip or neckband provides a sealed passage of the shaft through the gasket. Particularly, said first gasket portion, preferably said lip or neckband, at least partially extends along said shaft in that providing a tubular passage for said shaft.

According to embodiments, said coupling portion comprises a cuplike, conical or tapered shape which opens downwardly. In addition, the gasket may comprise a stepped shape. Said gasket may be rotationally symmetric with respect to a vertical central axis which coincides with the longitudinal vertical axis of the shaft. Said upper annular portion may comprise a smaller diameter than the lower annular portion. Thereby it is possible to provide a sealed protection of the control element, specifically an electric switch included in said control element, arranged below the gasket without a gasket portion which encompasses the horizontal top portion at its upper surface.

According to embodiments, the second gasket portion comprises an annular, plate-like shape. Due to the annular, plate-like shape, the second gasket portion is adapted to lie flat against the lower surface of the appliance portion.

According to the invention, the radial width of the second gasket portion is greater than the radial width of the coupling portion. Thereby a large contact surface between the gasket and the lower surface of the appliance portion is obtained.

According to embodiments, said coupling portion comprises a diameter which is equal or essentially equal to the diameter of the opening included in the appliance portion. Thereby a squeeze-connection between the gasket and the edge of the opening provided in the appliance portion is obtained.

According to embodiments, said gasket is a single-piece gasket made of an elastomer. The gasket may be formed using a single injection moulding process based on which all portions of the gasket are manufactured. So, in other words, the gasket is not assembled using multiple parts but is manufactured as a one-piece part.

According to embodiments, said gasket is made of silicone. Thereby a high elasticity and deformability of the gasket is obtained. Said silicone may be a high-temperature silicone with a temperature stability up to 280°C.

According to embodiments, the gasket comprises an elastic material with a shore-A hardness of 55 or lower, preferably 50 or lower. Thereby a high elasticity is obtained.

According to embodiments, at least a portion of the gasket is treated with talc or a lubricant. Thereby friction noise can be prevented.

According to embodiments, the first gasket portion is adapted to enclose the shaft such that the first gasket portion remains in its position at the shaft when pushing said shaft downwardly. Thus, when pushing the shaft, the first gasket portion does not move or slide along the shaft but the gasket, specifically the coupling portion, is elastically deformed.

According to embodiments, the coupling portion is adapted to be reversibly deformed when pushing the shaft downwardly. Specifically, the coupling portion may deflect downwardly when pushing the button. Thus, the gasket is only deformed but not moved along the shaft which enhances the sealing effect.

The term "essentially" or "approximately" as used in the present disclosure means deviations from the exact value by +/- 10%, preferably by +/- 5% and/or deviations in the form of changes that are insignificant for the function.

### BRIEF DESCRIPTION OF THE DRAWINGS

The various aspects of the invention, including its particular features and advantages, will be readily understood from the following detailed description and the accompanying drawings, in which:
- Fig. 1: shows an example schematic side view of a gasket;
- Fig. 2: shows the gasket according to Fig. 1 in an installed position at the gas hop in a lateral sectional view;
- Fig. 3: shows a perspective top view onto the gasket provided at a shaft of a control element when the horizontal hob portion is removed; and
- Fig. 4: shows a perspective top view onto the gasket provided at a shaft of a control element when the horizontal hob portion is installed.

### DETAILED DESCRIPTION OF PREFERRED EMBODIMENTS

The present invention will now be described more fully with reference to the accompanying drawings, in which example embodiments are shown. However, this invention should not be construed as limited to the embodiments set forth herein. Throughout the following description similar reference numerals have been used to denote similar elements, parts, items or features, when applicable.

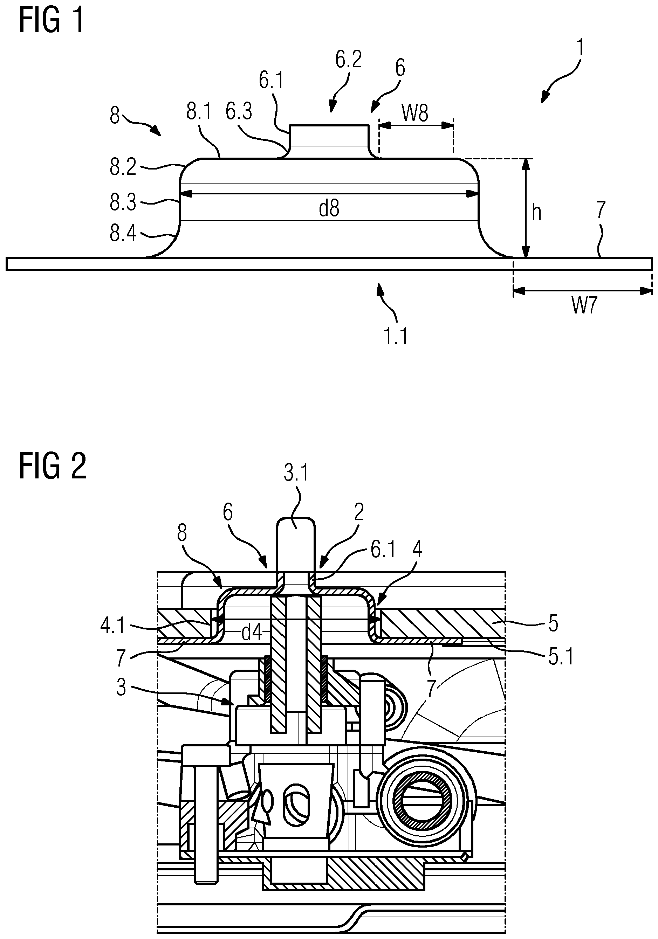

Fig. 1 shows a schematic illustration of a gasket 1 according to an example embodiment. In a broad sense, the gasket 1 comprises a cap-like, plate-like or bell-like shape. Said gasket 1 comprises a stepped shape which narrows from bottom to top. Said gasket 1 is adapted to seal a passage provided between a horizontal portion of a gas hob, preferably between a horizontal worktop of a gas hob and a shaft of a control element provided through an opening within said horizontal portion, respectively, a horizontal worktop of the gas hob. In the following, said horizontal portion is also referred to as horizontal appliance portion. The control element may be, for example, a gas tap of a gas hob.

The gasket 1 comprises a first gasket portion 6, preferably forming an upper gasket portion, a second gasket portion 7, preferably forming a lower gasket portion and a coupling portion 8 being arranged between said first and second gasket portions 6, 7 and being adapted to couple said first and second first and second gasket portions 6, 7 in a liquid-tight manner.

The first gasket portion 6 comprises or may be formed by a lip 6.1 or neckband protruding upwardly in order to provide a liquid tight sealing at the shaft of the control element. As shown in Fig. 2, the first gasket portion 6 may comprise an opening 6.2 through which said shaft 3.1 of the control element 3 is passing through. Said first gasket portion 6, preferably said lip 6.1 may at least partially extend along the shaft 3.1, i.e. the first gasket portion 6, respectively, said lip 6.1 provides a tubular passage for said shaft 3.1. The diameter of the opening 6.2 is chosen equal or slightly smaller than the diameter of the shaft 3.1 in order to provide a tight fit of the gasket 1 at the shaft 3.1. In case that the shaft 3.1 is pressed, the first gasket portion 6 may not move along the shaft 3.1 but will move together with the shaft 3.1 downwardly. Thereby, the gasket 1, specifically the coupling portion 8, is reversibly deformed and returns into its originally shape if the pressure on the shaft 3.1 is released.

The first gasket portion 6 is coupled by mean of a rounded transition portion 6.3 with the coupling portion 8. Said coupling portion 8 comprises at least a first, a second and a third section 8.1, 8.2, 8.3. Said first section 8.1 is attached to the transition portion 6.3 and comprises an annular shape. Said first section 8.1 may be arranged in a horizontal plane which is perpendicular or essentially perpendicular to the shaft 3.1 of the control element. In other words, the first section 3.1 is a planar section which is arranged parallel or essentially parallel to the horizontal appliance portion 5 of the gas hob.

The first section 8.1 of the coupling portion 8 may be a ring-shaped section which comprises a geometry equal or essentially equal to the opening 4 within the horizontal appliance portion 5, through which said shaft 3.1 is protruding. So in other words, the first section 8.1 covers essentially the whole opening cross-section between said shaft and an edge 4.1, preferably a circular or ring-shaped edge 4.1 of said opening 4.

The second section 8.2 of the coupling portion 8 is a transition section between said first section 8.1 and said third section 8.3 of said coupling portion 8. Said second section 8.2 may provide a transition between said horizontally arranged first section 8.1 and said vertically arranged third section 8.3. Said second section 8.2 may provide a rounded transition between said first and third section 8.1, 8.3.

The third section 8.3 of the coupling portion 8 is a tubular portion which is arranged vertically or essentially vertically, i.e. the longitudinal axis of said third section 8.3 extends in vertical or essentially vertical direction. The third section 8.3 is adapted to couple an upper portion of the gasket 1 (e.g. built by the first gasket portion 6 and the first and second section 8.1, 8.2 of the coupling portion 8) with a bottom portion of the gasket 1, e.g. build by the second gasket portion 7. Said third section 8.3 radially limits an interior space 1.1 within the gasket 1, through which said shaft 3.1 extends through.

Said coupling portion 8, specifically, said third section 8.3 of the coupling portion 8 is coupled with the second gasket portion 7 using a transition portion 8.4. Said transition portion 8.4 may be adapted to provide a coupling between the vertically arranged third section 8.3 and the horizontally arranged second gasket portion 7. For example, the transition portion 8.4 may provide a rounded transition between the third section 8.3 of the coupling portion 8 and the second gasket portion 7.

The second gasket portion 7 may be an annular, respectively, ring-shaped, planar portion. Said second gasket portion 7 is adapted to be arranged below the appliance portion 5. The radial width W7 of the second gasket portion 7 is greater than the radial width W8 of the coupling portion 8, respectively, greater than the height h of the coupling portion 8. Thus, the second gasket portion 7 comprises a significant extension below the planar appliance portion 5 thereby avoiding an ingress of liquid through the opening 4 in an area below said gasket 1. Said second gasket portion 7 abuts with its planar upper surface against the lower surface 5.1 of the appliance portion 5.

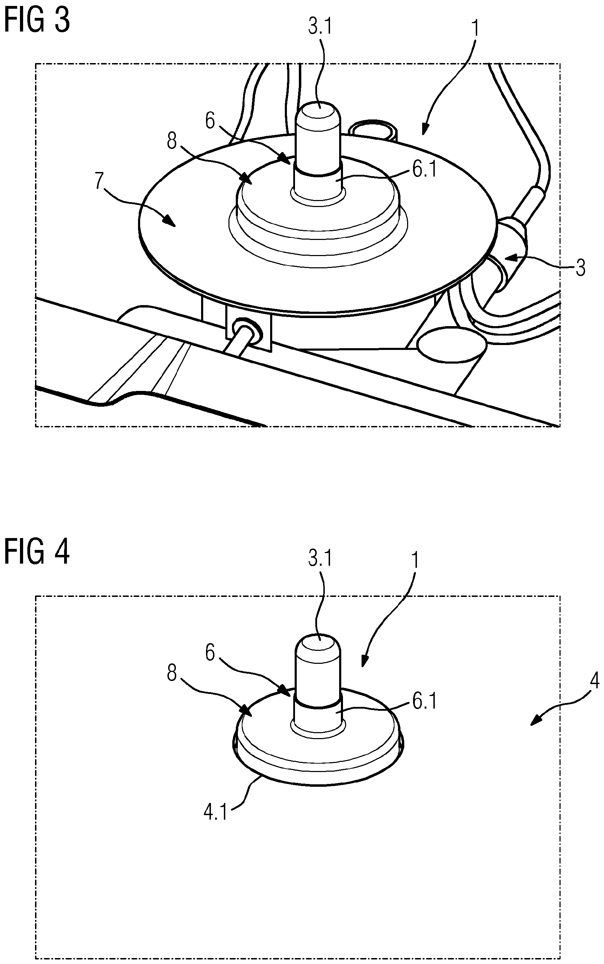

Fig. 3 shows the gasket 1 arranged on the shaft 3.1 of the control element 3 in a state in which the appliance portion 5 is removed. The gasket 1 comprises a radial extent such that the whole horizontal cross section of the control element 3 is covered by said plate-shaped gasket 1. For example, the gasket 1 may comprise an overall diameter of more than 40mm, specifically more than 50mm.

Fig. 4 shows the appliance portion 5, specifically the appliance worktop comprising an opening 4 with a circular edge 4.1 through which the shaft 3.1 and a portion of the gasket 1, specifically the first gasket portion 6 and the coupling portion 8 (at least partially) extends through. As shown in Fig. 2 and Fig. 4, the whole opening 4 is sealed by said gasket 1 thereby avoiding an undesired ingress of liquid through said opening, at least in situations in which a control knob to be arranged at the shaft 3.1 is removed. The diameter d8 of the coupling portion 8 is adapted to the diameter d4 of the opening 4 such that the coupling portion 8 comprises a tight fit or essentially a tight fit within said opening 4. As shown in Fig. 4, the gasket 1 is not visible in case that a knob is provided at the shaft 3.1 because the gasket does not radially extend over the edge 4.1 of the opening 4 at the upper side of the appliance portion 5.

In order to enhance the sealing effect, the gasket 1 may comprise a soft elastic material. The gasket 1 may be a single-piece gasket. According to an embodiment, the elastic material may have a Shore-A hardness of 50 or less. The elastic material may be a silicone, specifically a heat-resistant silicone (e.g. heat resistant up to 280°C).

In order to avoid any friction noise, the gasket 1 may be treated with a lubricant, e.g. with talc. According to embodiments, the whole gasket 1 or only a certain surface portion may be treated with said lubricant.

It should be noted that the description and drawings merely illustrate the principles of the proposed gasket and household appliance. Those skilled in the art will be able to implement various arrangements that, although not explicitly described or shown herein, embody the principles of the invention.

### List of reference numerals

- 1: gasket
- 1.1: interior space
- 2: passage
- 3: control element
- 3.1: shaft
- 4: opening
- 4.1: edge
- 5: appliance portion
- 5.1: lower surface
- 6: first gasket portion
- 6.1: lip
- 6.2: opening
- 6.3: transition portion
- 7: second gasket portion
- 8: coupling portion
- 8.1: first section
- 8.2: second section
- 8.3: third section
- 8.4: transition portion

- d4: diameter
- d8: diameter
- h: height
- W7: radial width of second gasket portion
- W8: radial width of coupling portion

## Claims

1. Household appliance, specifically gas hob, comprising a horizontal appliance portion (5), preferably an appliance worktop, and one or more control elements (3) provided at said appliance portion (5), the control element comprising a shaft (3.1), wherein an area between an opening (4) of said appliance portion (5) and a shaft (3.1) of the control element (3) is sealed by a gasket (1), the gasket sealing a passage (2) of the shaft (3.1) through the appliance portion (5), the gasket (1) comprising:
- a first gasket portion (6) being adapted to provide a sealed connection around the shaft (3.1) of the control element (3);
- a second gasket portion (7) adapted to be arranged below said appliance portion (5); and
- a coupling portion (8) for coupling said first and second gasket portions (6, 7);
wherein said gasket (1) is adapted to seal a ring-shaped passage (2) between said shaft (3.1) of the control element (3) and the edge (4.1) of the opening (4) of the appliance portion (5) in order to avoid an ingress of liquid into one or more control element portions arranged below the gasket,
**characterized in that**
the first gasket portion (6) comprises a lip (6.1) or neckband protruding upwardly from the coupling portion (8) both in an assembled state and in a non-assembled state, wherein the radial width (W7) of the second gasket portion (7) is greater than the radial width (W8) of the coupling portion (8), and wherein particularly said first gasket portion (6), preferably said lip (6.1), at least partially extends along said shaft (3.1) in that providing a tubular passage for said shaft (3.1).

2. Household appliance according to claim 1, wherein the gasket comprises a stepped contour with a lower annular portion provided by the second gasket portion (7) and an upper annular portion provided by a first section (8.1) of the coupling portion (8).

3. Household appliance according to claim 2, wherein said lower annular portion and said upper annular portion are coupled by a ring-shaped third section (8.3) of the coupling portion (8) vertically extending between said upper and lower annular portion.

4. Household appliance according to anyone of the preceding claims, wherein said coupling portion (8) comprises a cuplike, conical or tapered shape which opens downwardly.

5. Household appliance according to anyone of the preceding claims, wherein the second gasket portion (7) comprises an annular, plate-like shape.

6. Household appliance according to anyone of the preceding claims, wherein said coupling portion (8) comprises a diameter (d8) which is equal or essentially equal to the diameter (d4) of the opening (4) included in the appliance portion (5).

7. Household appliance according to anyone of the preceding claims, wherein said gasket (1) is a single-piece gasket made of an elastomer.

8. Household appliance according to anyone of the preceding claims, wherein said gasket (1) is made of silicone.

9. Household appliance according to anyone of the preceding claims, wherein the gasket comprises an elastic material with a shore-A hardness of 55 or lower, preferably 50 or lower.

10. Household appliance according to anyone of the preceding claims, wherein at least a portion of the gasket (1) is treated with talc or a lubricant.

11. Household appliance according to anyone of the preceding claims, wherein the first gasket portion (6) is adapted to enclose the shaft (3.1) such that the first gasket portion (6) remains in its position at the shaft (3.1) when pushing said shaft (3.1) downwardly.

12. Household appliance according to anyone of the preceding claims, wherein the coupling portion (8) is adapted to be reversibly deformed when pushing the shaft (3.1) downwardly.

## Patentansprüche

1. Haushaltsgerät, konkret Gasherd, mit einem horizontalen Geräteabschnitt (5), vorzugsweise einer Gerätearbeitsplatte, und einem oder mehreren an dem Geräteabschnitt (5) vorgesehenen Steuerelementen (3), wobei das Steuerelement eine Welle (3.1) umfasst, wobei ein Bereich zwischen einer Öffnung (4) des Geräteabschnitts (5) und einer Welle (3.1) des Steuerelements (3) durch eine Dichtung (1) abgedichtet ist, wobei die Dichtung einen Durchgang (2) der Welle (3.1) durch den Geräteabschnitt (5) abdichtet, wobei die Dichtung (1) umfasst:
- einen ersten Dichtungsabschnitt (6), der dazu angepasst ist, eine abgedichtete Verbindung um die Welle (3.1) des Steuerelements (3) herum bereitzustellen;
- einen zweiten Dichtungsabschnitt (7), der dazu angepasst ist, unter dem Geräteabschnitt (5) angeordnet zu werden; und
- einen Kopplungsabschnitt (8) zum Koppeln des ersten und zweiten Dichtungsabschnitts (6, 7);
wobei die Dichtung (1) dazu angepasst ist, einen ringförmigen Durchgang (2) zwischen der Welle (3.1) des Steuerelements (3) und dem Rand (4.1) der Öffnung (4) des Geräteabschnitts (5) abzudichten, um ein Eindringen von Flüssigkeit in einen oder mehrere Steuerelementteile, die unterhalb der Dichtung angeordnet sind, zu vermeiden, **dadurch gekennzeichnet, dass**
der erste Dichtungsabschnitt (6) eine Lippe (6.1) oder ein Nackenband aufweist, das sowohl in einem zusammengebauten Zustand als auch in einem nicht zusammengebauten Zustand vom Kopplungsabschnitt (8) nach oben vorsteht, wobei die radiale Breite (W7) des zweiten Dichtungsabschnitts (7) größer als die radiale Breite (W8) des Kopplungsabschnitts (8) ist, und wobei sich insbesondere der erste Dichtungsabschnitt (6), vorzugsweise die Lippe (6.1), mindestens teilweise entlang der Welle (3.1) erstreckt, indem er einen rohrförmigen Durchgang für die Welle (3.1) bereitstellt.

2. Haushaltsgerät gemäß Anspruch 1, wobei die Dichtung eine abgestufte Kontur mit einem unteren ringförmigen Abschnitt, der durch den zweiten Dichtungsabschnitt (7) bereitgestellt wird, und einem oberen ringförmigen Abschnitt, der durch einen ersten Abschnitt (8.1) des Kopplungsabschnitts (8) bereitgestellt wird, aufweist.

3. Haushaltsgerät gemäß Anspruch 2, wobei der untere ringförmige Abschnitt und der obere ringförmige Abschnitt durch einen ringförmigen dritten Abschnitt (8.3) des Kopplungsabschnitts (8) gekoppelt sind, der sich vertikal zwischen dem oberen und unteren ringförmigen Abschnitt erstreckt.

4. Haushaltsgerät gemäß einem der vorhergehenden Ansprüche, wobei der Kopplungsabschnitt (8) eine becherartige, konische oder sich verjüngende Form aufweist, die sich nach unten hin öffnet.

5. Haushaltsgerät gemäß einem der vorhergehenden Ansprüche, wobei der zweite Dichtungsabschnitt (7) eine ringförmige, plattenartige Form aufweist.

6. Haushaltsgerät gemäß einem der vorhergehenden Ansprüche, wobei der Kopplungsabschnitt (8) einen Durchmesser (d8) aufweist, der gleich oder im wesentlichen gleich dem Durchmesser (d4) der in dem Geräteabschnitt (5) enthaltenen Öffnung (4) ist.

7. Haushaltsgerät gemäß einem der vorhergehenden Ansprüche, wobei die Dichtung (1) eine einteilige Dichtung aus einem Elastomer ist.

8. Haushaltsgerät gemäß einem der vorhergehenden Ansprüche, wobei die Dichtung (1) aus Silikon besteht.

9. Haushaltsgerät gemäß einem der vorhergehenden Ansprüche, wobei die Dichtung ein elastisches Material mit einer Shore-A-Härte von 55 oder weniger, vorzugsweise 50 oder weniger, aufweist.

10. Haushaltsgerät gemäß einem der vorhergehenden Ansprüche, wobei mindestens ein Abschnitt der Dichtung (1) mit Talkum oder einem Gleitmittel behandelt ist.

11. Haushaltsgerät gemäß einem der vorhergehenden Ansprüche, wobei der erste Dichtungsabschnitt (6) dazu angepasst ist, die Welle (3.1) zu umschließen, sodass der erste Dichtungsabschnitt (6) in seiner Position an der Welle (3.1) verbleibt, wenn die Welle (3.1) nach unten gedrückt wird.

12. Haushaltsgerät gemäß einem der vorhergehenden Ansprüche, wobei der Kopplungsabschnitt (8) dazu angepasst ist, sich reversibel zu verformen, wenn die Welle (3.1) nach unten gedrückt wird.

## Revendications

1. Appareil ménager, spécifiquement plaque de cuisson à gaz, comportant une partie horizontale (5) d'appareil, de préférence un plan de travail d'appareil, et un ou plusieurs éléments (3) de commande placés au niveau de ladite partie (5) d'appareil, l'élément de commande comportant un arbre (3.1), une zone située entre une ouverture (4) de ladite partie (5) d'appareil et un arbre (3.1) de l'élément (3) de commande étant étanchéifiée par un joint (1), le joint étanchéifiant un passage (2) de l'arbre (3.1) à travers la partie (5) d'appareil, le joint (1) comportant :
- une première partie (6) de joint qui est prévue pour assurer une liaison étanche autour de l'arbre (3.1) de l'élément (3) de commande ;
- une deuxième partie (7) de joint prévue pour être disposée au-dessous de ladite partie (5) d'appareil ; et
- une partie (8) de couplage destinée à coupler lesdites première et deuxième parties (6, 7) de joint ;
ledit joint (1) étant prévu pour étanchéifier un passage (2) en forme d'anneau entre ledit arbre (3.1) de l'élément (3) de commande et le bord (4.1) de l'ouverture (4) de la partie (5) d'appareil afin d'éviter une entrée de liquide dans une ou plusieurs parties d'élément de commande disposées au-dessous du joint,
**caractérisé en ce que** la première partie (6) de joint comporte un rebord (6.1) ou une collerette faisant saillie vers le haut à partir de la partie (8) de couplage tant dans un état assemblé que dans un état non assemblé, la largeur radiale (W7) de la deuxième partie (7) de joint étant supérieure à la largeur radiale (W8) de la partie (8) de couplage et, en particulier, ladite première partie (6) de joint, de préférence ledit rebord (6.1), s'étendant au moins partiellement le long dudit arbre (3.1), ménageant ainsi un passage tubulaire pour ledit arbre (3.1).

2. Appareil ménager selon la revendication 1, le joint comportant un contour étagé doté d'une partie annulaire inférieure constituée par la deuxième partie (7) de joint et d'une partie annulaire supérieure constituée par une première section (8.1) de la partie (8) de couplage.

3. Appareil ménager selon la revendication 2, ladite partie annulaire inférieure et ladite partie annulaire supérieure étant couplées par une troisième section (8.3) en forme d'anneau de la partie (8) de couplage s'étendant verticalement entre lesdites parties annulaires supérieure et inférieure.

4. Appareil ménager selon l'une quelconque des revendications précédentes, ladite partie (8) de couplage présentant une forme en coupelle, conique ou amincie qui s'ouvre vers le bas.

5. Appareil ménager selon l'une quelconque des revendications précédentes, la deuxième partie (7) de joint présentant une forme annulaire semblable à une plaque.

6. Appareil ménager selon l'une quelconque des revendications précédentes, ladite partie (8) de couplage présentant un diamètre (d8) qui est égal ou essentiellement égal au diamètre (d4) de l'ouverture (4) comprise dans la partie (5) d'appareil.

7. Appareil ménager selon l'une quelconque des revendications précédentes, ledit joint (1) étant un joint monobloc constitué d'un élastomère.

8. Appareil ménager selon l'une quelconque des revendications précédentes, ledit joint (1) étant constitué de silicone.

9. Appareil ménager selon l'une quelconque des revendications précédentes, le joint comportant un matériau élastique d'une dureté Shore-A inférieure ou égale à 55, de préférence inférieure ou égale à 50.

10. Appareil ménager selon l'une quelconque des revendications précédentes, au moins une partie du joint (1) étant traitée avec du talc ou un lubrifiant.

11. Appareil ménager selon l'une quelconque des revendications précédentes, la première partie (6) de joint étant prévue pour envelopper l'arbre (3.1) de telle façon que la première partie (6) de joint reste dans sa position au niveau de l'arbre (3.1) lorsque ledit arbre (3.1) est poussé vers le bas.

12. Appareil ménager selon l'une quelconque des revendications précédentes, la partie (8) de couplage étant prévue pour être déformée de façon réversible lorsque l'arbre (3.1) est poussé vers le bas.
